# DEMANDE DE BREVET EUROPEEN

(11) **EP 4 604 261 A1**
(43) Date de publication de la demande: **20.08.2025**
(21) Numéro de dépôt: 24305247.9
(22) Date de dépôt: 13.02.2024
(51) Int. Cl.: H01M 10/42, H01M 10/48, H01M 50/103, H01M 50/15, H01M 50/209, H01M 50/503, H01M 50/507, H01M 50/514, H01M 50/569

(54) **CELLULE DE BATTERIE ET ASSEMBLAGE DE TELLES CELLULES**

(71) Demandeur: Automotive Cells Company SE, 33520 Bruges (FR)
(72) Inventeur: BAYLAC, Johan, 33800 Bordeaux (FR); CHAUVEAU, Pierre, 33520 Bruges (FR); MATHIEU, Alexandre, 33300 Bordeaux (FR); CHORIER, Gaël, 33520 Bruges (FR)
(74) Mandataire: Alatis

(57) **Abrégé**

L'invention concerne un ensemble (1) de cellules (10) d'une batterie, l'ensemble (1) comprenant une pluralité de cellules (10) configurées pour être accolées successivement deux à deux suivant un axe d'assemblage (A) dans une position assemblée de l'ensemble (1) de cellules (10), chaque cellule (10) comprenant : un boitier (100) comprenant au moins une première et une deuxième parois latérales (103A, 103B) s'étendant parallèlement entre elles et orthogonalement à l'axe d'assemblage (A) dans la position assemblée ; un premier terminal (11) et un deuxième terminal (12) ; l'ensemble de cellules (1) étant caractérisé en ce qu'il comprend un circuit de surveillance (200) configuré pour détecter au moins une donnée prédéterminée de chaque cellule (10) de l'ensemble de cellules (1), le circuit de surveillance (200) comprenant une pluralité de languettes d'interconnexion (210), chaque languette d'interconnexion (210) étant destinée à recouvrir, au moins en partie, au moins un terminal (11) de l'une des cellules de chaque paire de cellules adjacentes.

## Description

### DOMAINE TECHNIQUE DE L'INVENTION

L'invention concerne, de façon générale, le domaine technique des cellules de batteries de véhicules hybrides ou électriques.

L'invention se rapporte plus spécifiquement à un ensemble de cellules d'une batterie comprenant un circuit d'interconnexion reliant les cellules entre elles.

### ÉTAT DE LA TECHNIQUE ANTÉRIEURE

Les véhicules automobiles à traction, à propulsion ou à quatre roues motrices électrique ou hybride, comportent un ou plusieurs modules de batterie reliés à un réseau de puissance pour alimenter un moteur électrique (de traction, de propulsion ou de quatres roues motrices).

Les modules de batterie sont regroupés dans un carter et forment alors un bloc batterie aussi souvent désigné par l'expression anglaise « battery pack », ce carter contenant généralement une interface de montage et des bornes de raccordement.

Chaque module de batterie comprend au moins une cellule électrochimique, généralement plusieurs cellules électrochimiques, générant du courant par réaction chimique, par exemple de type lithium-ion (ou Li-ion), de type Ni-Mh, ou Ni-Cd ou plomb.

Une cellule électrochimique peut être de forme parallélépipédique rectangle, on parle alors de cellule « prismatique », de forme cylindrique ou en forme de poche, désignée par l'expression anglaise « pouch ».

Les cellules prismatiques comportent un boitier rigide, souvent métallique, comprenant quatre parois latérales et deux parois d'extrémité, dont une paroi dite « d'appui ». À l'intérieur du boitier sont logés une pluralité d'empilements d'électrodes positives reliées les unes aux autres à un premier terminal, et une pluralité d'empilements d'électrodes négatives reliées les unes aux autres à un deuxième terminal. Les terminaux sont eux-mêmes fixés/soudés sur la paroi d'extrémité opposée à la paroi d'appui de la cellule.

Il est connu d'assembler, en série et/ou en parallèle, une pluralité de cellules électrochimiques afin de réaliser des modules ou des batteries électriques, à l'aide d'un dispositif d'interconnexion assurant un contact électrique entre les terminaux de deux cellules électrochimiques voisines. Le dispositif d'interconnexion peut par exemple être un ensemble de languettes métalliques soudées sur plusieurs terminaux de cellules pour les relier électriquement.

Afin d'assembler mécaniquement les cellules électrochimiques reliées électriquement, il est connu de les aligner sur un support plan ou un rail, la paroi d'appui étant en contact plan avec le support ou le rail, et de les maintenir aux deux extrémités compressées par des plaques parallèles fixes, un tel assemblage étant désigné sous le terme « module ».

Lorsqu'un utilisateur utilise un véhicule hybride ou électrique, il a besoin de connaître l'état de charge de la batterie du véhicule. Pour ce faire, il est connu de souder un circuit de surveillance, par exemple un circuit imprimé flexible sur les parois latérales ou sur les éléments d'interconnexion des cellules. Les circuits de surveillances sont ensuite reliés à une carte électronique centrale, appelée en termes anglosaxons « Battery Management System » (BMS) qui fournit entre autres l'état de charge de la batterie, communément désigné en termes anglosaxons « State of Charge » (SoC).

Cependant, dans le cas de cellules assemblées électriquement par pression de terminaux situés sur les parois latérales des cellules, l'ajout de matière sur les parois latérales peut gêner la connexion électrique entre les cellules.

De plus, le soudage des circuits de surveillance les rend indémontables et peut complexifier le remplacement d'un circuit de surveillance dans une batterie, en cas de défaillance.

### EXPOSE DE L'INVENTION

L'invention vise à remédier à tout ou partie des inconvénients de l'état de la technique en proposant notamment un circuit de surveillance facilement démontable et adapté à un ensemble de cellules de batterie accolées successivement deux à deux, les terminaux des cellules étant positionnés sur des parois latérales opposées de la cellule.

L'invention concerne également l'intégration d'un tel circuit de surveillance dans un ensemble de cellules.

Pour ce faire est proposé, selon un premier aspect de l'invention, un ensemble de cellules d'une batterie, l'ensemble comprenant une pluralité de cellules configurées pour être accolées successivement deux à deux suivant un axe d'assemblage dans une position assemblée de l'ensemble de cellules, chaque cellule comprenant :
- un boitier comprenant au moins une première et une deuxième parois latérales s'étendant parallèlement entre elles et orthogonalement à l'axe d'assemblage dans la position assemblée ;
- un premier terminal et un deuxième terminal ;
l'ensemble de cellules étant remarquable en ce qu'il comprend un circuit de surveillance configuré pour détecter au moins une donnée prédéterminée de chaque cellule de l'ensemble de cellules, le circuit de surveillance comprenant une pluralité de languettes d'interconnexion, chaque languette d'interconnexion étant destinée à recouvrir, au moins en partie, au moins un terminal de l'une des cellules de chaque paire de cellules adjacentes.

L'invention présente l'avantage technique de pouvoir disposer un circuit de surveillance sur un ensemble de cellules indépendamment de la position des terminaux sur les cellules.

Selon un mode de réalisation :
- le premier terminal est saillant depuis un premier orifice principal de la cellule associée, le premier orifice principal s'étendant dans un premier plan de référence coplanaire à la première paroi latérale du boitier ; et
- le deuxième terminal est saillant depuis un deuxième orifice principal de la cellule associée, le deuxième orifice principal s'étendant dans un deuxième plan de référence coplanaire à la deuxième paroi latérale du boitier.

Selon un mode de réalisation préférentiel, les première et deuxième parois latérales du boitier, forment des grandes parois latérales du boitier par rapport aux deux autres parois latérales formant des petites parois latérales du boitier. En d'autres termes, les grandes parois latérales présentent chacune une paroi plus grande que celles des deux autres parois latérales. Un tel ensemble de cellules est remarquable en ce que la connexion entre les cellules est assurée par une simple compression des cellules suivant l'axe d'assemblage.

Ainsi, l'invention fournit un circuit de surveillance intégrable à un ensemble de cellules de batterie disposant de terminaux de cellules s'étendant dans des plans de référence coplanaires aux grandes parois latérales des cellules. La configuration du circuit de surveillance sur l'ensemble de cellules présente l'avantage de ne pas nécessiter d'éléments d'interconnexion additionnels entre les cellules de batterie. De plus, le circuit de surveillance présente l'avantage d'être démontable contrairement à une solution soudée connue dans l'état de la technique.

Chaque languette du circuit de surveillance présente la forme d'une lamelle d'épaisseur homogène, de sorte qu'une languette positionnée sur un premier terminal de l'une des cellules d'une paire de cellules adjacentes forme une surface de contact plane pour venir au contact d'un deuxième terminal de l'autre des cellules de la paire de cellules adjacentes.

Selon un mode de réalisation, le premier terminal de chaque cellule de l'ensemble de cellules délimite une surface de contact parallèle et distante de la première paroi latérale du boitier.

De préférence, la surface de contact du premier terminal présente un contour rectangulaire.

Selon un mode de réalisation, le circuit de surveillance comprend un réseau de connexions relié à une carte électronique centrale dudit circuit de surveillance, et une pluralité de connecteurs électriques de languette pour relier électriquement la pluralité de languettes au réseau de connexions.

La carte électronique centrale permet de traiter un ensemble de données prédéterminées détectées par chaque languette d'interconnexion de la pluralité de languettes de l'ensemble de cellules pour les transmettre à une interface, par exemple une interface homme-machine.

Selon un mode de réalisation, au moins une partie du circuit de surveillance comprend un circuit flexible apte à se déformer élastiquement pour s'adapter à la forme de chaque cellule de l'ensemble de cellules. En particulier, préciser que le circuit flexible est configuré de sorte à être plié à au moins 90°, de préférence entre 90° et 180°, ceci sans être détérioré et en conservant ses fonctions.

Plus précisément, au moins la pluralité de connecteurs électriques du circuit de surveillance est déformable élastiquement, chaque connecteur présentant la forme d'un feuillard métallique apte à être plié à 90° sans être détérioré, pour par exemple longer deux faces latérales adjacentes d'une cellule de l'ensemble de cellules. Selon un mode de réalisation préférentiel, la pluralité de connecteurs électriques et le réseau de connexions sont déformables élastiquement.

Selon un mode de réalisation, pour une cellule d'une paire de cellules adjacentes donnée de l'ensemble de cellules :
- la languette d'interconnexion associée du circuit de surveillance est clipsée à la surface de contact du premier terminal associé ; et/ou
- la languette d'interconnexion associée du circuit de surveillance est collée à la surface de contact du premier terminal associé ; et/ou
- la languette d'interconnexion associée du circuit de surveillance est pincée sur la surface de contact du premier terminal associé.

Selon un mode de réalisation, chaque cellule de l'ensemble de cellules comporte un boitier formé d'un godet (aussi appelé « can » en termes anglosaxons), et d'un ou de deux couvercles pour fermer un espace intérieur du godet, et:
- le premier orifice principal est solidaire du godet ou du couvercle ou de l'un des deux couvercles ; et
- le deuxième orifice principal est solidaire du godet ou du couvercle ou de l'autre des deux couvercles.

De préférence :
- si l'un parmi les premier et deuxième orifices principaux est solidaire du godet, l'autre parmi les premier et deuxième orifices principaux est solidaire du godet ;
- si l'un parmi les premier et deuxième orifices principaux est solidaire du couvercle, l'autre parmi les premier et deuxième orifices principaux est solidaire du godet ;
- si l'un parmi les premier et deuxième orifices principaux est solidaire de l'un des deux couvercles, l'autre parmi les premier et deuxième orifices principaux est solidaire de l'autre des deux couvercles.

Selon un mode de réalisation, dans une position assemblée de l'ensemble de cellules, pour chaque paire de cellules adjacentes de l'ensemble de cellules, une languette d'interconnexion du circuit de surveillance, de préférence unique, se situe entre, de préférence encore est interposé entre, le premier terminal de l'une des cellules de la paire de cellules adjacentes et le deuxième terminal de l'autre des cellules de la paire de cellules adjacentes.

Les languettes d'interconnexion sont fabriquées en matériau(x) électriquement conducteur(s) pour permettre au premier terminal de l'une des cellules de la paire de cellules adjacentes d'être relié électriquement au deuxième terminal de l'autre cellule de la paire de cellules adjacentes.

Selon un mode de réalisation, l'ensemble comprend des moyens de compression pour presser l'ensemble de cellules de part et d'autre dudit ensemble de cellules suivant l'axe d'assemblage.

Les moyens de compression utilisés permettent de réduire les effets de gonflement des cellules à long terme. De plus, les moyens de compression créent une force de direction parallèle à l'axe d'assemblage, la force permettant de rapprocher les uns des autres les terminaux de cellules et de maintenir la connexion électrique entre les cellules, notamment entre deux terminaux d'une paire de cellules séparés par une languette d'interconnexion.

Selon un mode de réalisation, les cellules possèdent chacune une longueur supérieure à 250 mm, de préférence supérieure à 300 mm et/ou inférieure à 1500 mm, de préférence inférieure à 1200 mm.

### BRÈVE DESCRIPTION DES FIGURES

D'autres caractéristiques et avantages de l'invention ressortiront à la lecture de la description qui suit, en référence aux figures annexées, qui illustrent :
- figure 1 : un schéma de côté d'une cellule de batterie selon un premier mode de réalisation de l'invention, la cellule étant destinée à être intégrée dans un ensemble de cellules de batterie ;
- figure 2 : une vue de coupe de la cellule de batterie selon le mode de réalisation de la figure 1 ;
- figure 3 : une vue en perspective isométrique représentant une portion d'un circuit de surveillance pour une cellule de batterie ;
- figure 4 : une vue en perspective isométrique représentant un détail d'une cellule d'un ensemble de cellules munie d'une portion de circuit de surveillance, selon un deuxième mode de réalisation de l'invention ;
- figure 5 : une vue en perspective isométrique de l'ensemble de cellules de batterie muni d'une portion du circuit de surveillance selon le mode de réalisation de la figure 4 ;
- figure 6 : une vue en perspective isométrique représentant un détail d'une cellule d'un ensemble de cellules munie d'une portion de circuit de surveillance, selon un troisième mode de réalisation de l'invention ;
- figure 7 : une vue en perspective isométrique de l'ensemble de cellules de batterie muni d'une portion du circuit de surveillance selon le mode de réalisation de la figure 6 ;
- figure 8 : une vue en perspective isométrique d'un ensemble de cellules de batterie muni d'un circuit de surveillance complet ;
- figure 9 : une vue en perspective isométrique d'un connecteur intermédiaire du circuit de surveillance de la cellule de batterie.

Pour plus de clarté, les éléments identiques ou similaires sont repérés par des signes de référence identiques sur l'ensemble des figures.

Dans la description et les revendications, pour clarifier la description et les revendications, on adoptera à titre non limitatif la terminologie longitudinal, transversal et vertical en référence au trièdre **X, Y, Z** indiqué aux figures.

### DESCRIPTION DÉTAILLÉE D'UN MODE DE RÉALISATION

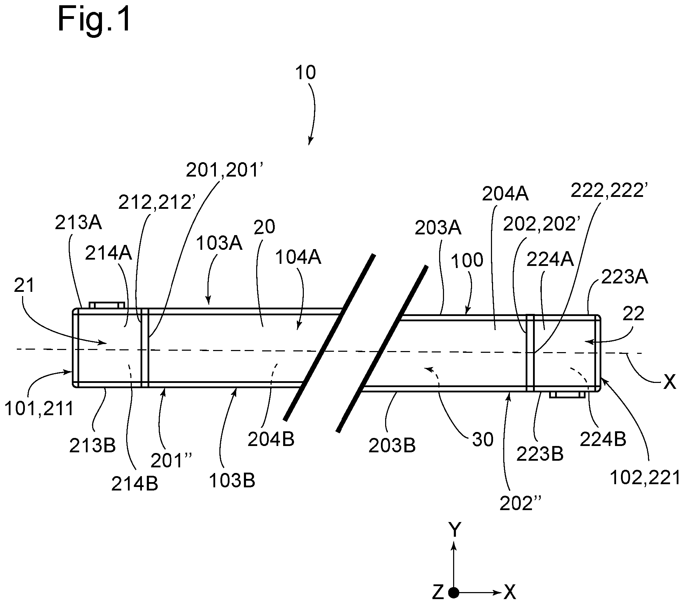

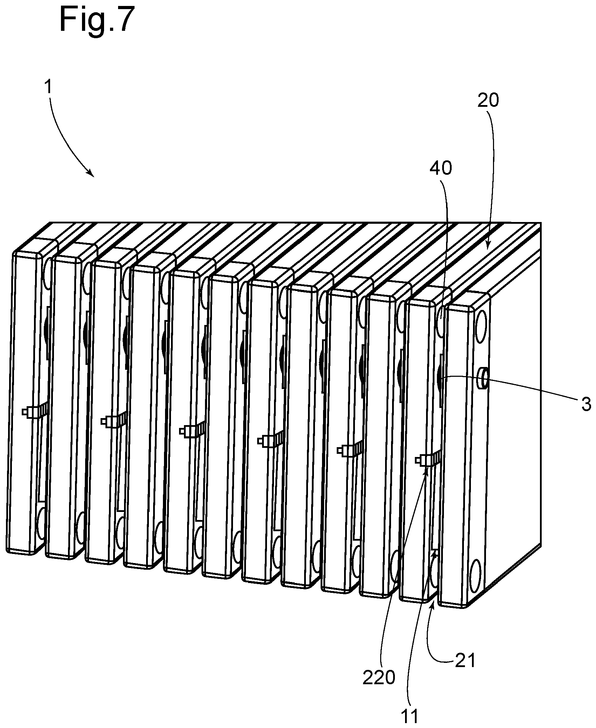

La figure 1 illustre une illustre une cellule **10** prismatique de batterie selon un premier mode de réalisation de l'invention, la cellule **10** étant destinée à être intégrée dans un ensemble **1** de cellules **10** de batterie, un tel ensemble **1** étant représenté sur la figure 7.

La cellule **10** de batterie présente une forme prismatique de forme parallélépipédique rectangle, et comprend un boitier **100** rigide, contrairement par exemple aux cellules en forme de poche. Le boitier **100** délimite un espace intérieur **30** à l'intérieur duquel est logé un ou plusieurs empilements électrochimiques (i.e. les « stacks ») pour former la cellule.

Dans ces exemples, le boitier **100** de la cellule **10** est prévu pour loger le ou les empilements électrochimiques avec un électrolyte solide ou liquide, de préférence solide (non illustré).

Le boitier **100** de la cellule **10** présente une forme prismatique de forme parallélépipédique rectangle. Le boitier **100** comprend une première **101** et une deuxième **102** parois d'extrémité, et quatre parois latérales **103A, 103B, 104A, 104B,** les quatre parois latérales s'étendant parallèlement entre elles deux à deux et parallèlement à un axe longitudinal de référence **X** de la cellule **10.**

En particulier, les quatre parois latérales **103A, 103B, 104A, 104B** comprennent deux parois latérales parallèles en vis-à-vis dites « petites » parois **104A, 104B** et de deux parois latérales parallèles en vis-à-vis dites « grandes » parois **103A, 103B,** les grandes parois **103A, 103B** ou parois longitudinales présentant chacune une aire supérieure à l'aire des petites parois **104A, 104B.** Les « petites » parois **104A, 104B** ou parois transversales forment des parois supérieure et inférieure, respectivement et s'étendent horizontalement. Les « grandes » parois **103A, 103B** forment des parois latérales avant et arrière et s'étendent verticalement.

Une longueur **L** du boîtier **100** de cellule **10** désigne sa plus grande dimension, correspondant à la distance entre les deux parois d'extrémité **101, 102** du boitier **100** de la cellule **10.** Une hauteur **h** du boîtier **100** désigne la distance entre les « petites » parois **104A, 104B** du boitier **100** de la cellule **10.**

Les parois latérales **103A, 103B, 104A, 104B** s'étendant parallèlement à l'axe longitudinal de référence du boitier **100** depuis la première paroi d'extrémité **101** jusqu'à la deuxième paroi d'extrémité **102** opposée longitudinalement.

Les parois latérales **103A, 103B, 104A, 104B** sont adjacentes deux à deux et forment un sous-ensemble tubulaire de section rectangulaire formant un corps du boitier **100** fermé à ses deux extrémités longitudinales par les première et deuxième parois d'extrémités **101, 102.**

Dans le mode de réalisation de la figure 1, le boitier **100** comprend, et en particulier est constitué par, un godet **20** fermé par deux couvercles : un premier couvercle **21** et un deuxième couvercle **22.**

Le premier couvercle **21** présente une forme parallélépipédique rectangle et comprend une paroi d'extrémité **211,** et quatre parois latérales **213A, 213B, 214A, 214B** s'étendant parallèlement entre elles deux à deux et parallèlement à un axe de référence **X1** du couvercle **21.**

Lesdites parois latérales **213A, 213B, 214A, 214B** s'étendent depuis la paroi d'extrémité **211** jusqu'à une extrémité longitudinalement opposée à la paroi d'extrémité **211** où les quatre parois latérales **213A, 213B, 214A, 214B** du premier couvercle **21** forment un rebord de raccordement **212** délimitant un contour fermé du premier couvercle **21.**

Les parois latérales **213A, 213B, 214A, 214B** sont adjacentes deux à deux et forment un sous-ensemble tubulaire de section rectangulaire fermé à une de ses extrémités longitudinales par la paroi d'extrémité **211** et ouverte à son extrémité longitudinale opposée par une ouverture **212'** délimitée par le rebord de raccordement **212.**

Le deuxième couvercle **22** présente une forme parallélépipédique rectangle et comprend une paroi d'extrémité **221,** et quatre parois latérales **223A, 223B, 224A, 224B** s'étendant parallèlement entre elles deux à deux et parallèlement à un axe de référence **X2** du deuxième couvercle **22.**

Lesdites parois latérales **223A, 223B, 224A, 224B** s'étendent depuis la paroi d'extrémité **221** jusqu'à une extrémité longitudinalement opposée à la paroi d'extrémité **221** où les quatre parois latérales **223A, 223B, 224A, 224B** du deuxième couvercle **22** forment un rebord de raccordement **222** délimitant un contour fermé du deuxième couvercle **22.**

Les parois latérales **223A, 223B, 224A, 224B** sont adjacentes deux à deux et forment un sous-ensemble tubulaire de section rectangulaire fermé à une de ses extrémités longitudinales par la paroi d'extrémité **221** et ouverte à son extrémité longitudinalement opposée par une ouverture **222'** délimitée par le rebord de raccordement **222.**

Le premier couvercle **21** et le deuxième couvercle **22** présentent ainsi un volume intérieur délimité par leurs parois respectives.

Le godet **20** du boitier présente une forme prismatique de forme parallélépipédique rectangle. Le godet **20** comprend quatre parois latérales **203A, 203B, 204A, 204B,** les quatre parois latérales s'étendant parallèlement entre elles deux à deux et parallèlement à l'axe longitudinal de référence **X** du boîtier **100** en position assemblée de la cellule **10.** Dans ce mode de réalisation, le godet **20** est en partie en matériau(x) métallique(s), de préférence constitué de matériau(x) métallique(s), par exemple en aluminium. Bien entendu, le matériau peut être différent sans modifier la nature de l'invention.

Les parois latérales **203A, 203B, 204A, 204B** s'étendent parallèlement à l'axe longitudinal de référence **X** du boitier **100** depuis une première portion d'extrémité **201"** jusqu'à une deuxième portion d'extrémité **202"** axialement opposée.

Les parois latérales **203A, 203B, 204A, 204B** du godet **20** sont adjacentes deux à deux et forment un sous-ensemble tubulaire de section rectangulaire ouvert à longitudinalement de part et d'autre, chaque portion d'extrémité présentant une ouverture, respectivement une première ouverture **201'** et une deuxième ouverture 202', délimitée par un rebord de raccordement **201, 202** associé. De cette manière, les parois latérales **203A, 203B, 204A, 204B** du godet **20** délimitent un espace intérieur ouvert de part et d'autre, axialement par rapport à l'axe de référence **X.**

La première ouverture **201'** et la deuxième ouverture **202'** du godet **20** s'étendent dans des plans parallèles l'un avec l'autre et orthogonaux aux parois latérales **203A, 203B, 204A, 204B.**

La première ouverture **201'** et la deuxième ouverture **202'** du godet 20 sont fermées de part et d'autre du godet **20** respectivement par le premier couvercle **21** et le deuxième couvercle **22.**

Le boitier **100** est configuré de sorte que le premier rebord de raccordement **201** du godet **20** coopère avec le rebord de raccordement **212** complémentaire correspondant du premier couvercle **21** du boitier **100,** et le deuxième rebord de raccordement **202** du godet **20** coopère avec le rebord de raccordement **222** complémentaire correspondant du deuxième couvercle **22** du boitier **100,** ceci pour fermer le boitier **100.** Chaque couvercle **21** est fixé au godet **20** par des moyens de fixation à demeure, par exemple par soudage. Ainsi, dans une configuration possible les premier et deuxième rebords de raccordement **201, 202** du godet **20** sont aboutés et soudés aux rebords de raccordement **212, 222** du premier **21** et du deuxième **22** couvercles pour fermer le boitier **100** de la cellule **10.**

Dans une position fermée du boitier **100** dans laquelle les couvercles ferment les ouvertures de part et d'autre axialement du godet **20** par rapport à l'axe de référence **X** :
- chaque paroi latérale **213A, 213B, 214A, 214B** du premier couvercle **21** est positionnée dans le prolongement axial par rapport à l'axe de référence **X** de l'une des parois latérales **203A, 203B, 204A, 204B** du godet **20** d'un côté du godet **20,** depuis la première portion d'extrémité **101** ; et
- chaque paroi latérale **223A, 223B, 224A, 224B** du deuxième couvercle **22** est positionnée dans le prolongement axial par rapport à l'axe de référence **X** de l'une des parois latérales **203A, 203B, 204A, 204B** du godet **20** de l'autre côté du godet **20,** depuis la deuxième portion d'extrémité **102.**

Ainsi dans ce mode de réalisation, le godet **20** correspond à une partie centrale du corps du boitier **100,** les couvercles **21, 22** rapportés venant fermer le corps de boitier **100** pour former ledit boitier **100** dans une position assemblée.

La première paroi d'extrémité **101** et la deuxième paroi d'extrémité **102** du boitier **100** sont constituées respectivement la paroi d'extrémité **211** du premier couvercle **21** et la paroi d'extrémité **221** du deuxième couvercle **22.**

Les quatre parois latérales **103A, 103B, 104A, 104B** du boitier **10** sont formée par la réunion des parois latérales **213A, 213B, 214A, 214B** du premier couvercle **21,** des parois latérales **203A, 203B, 204A, 204B** du godet **20,** et des parois latérales **221A, 221B, 222A, 222B** du deuxième couvercle **22.**

Les grandes parois latérales **203A, 203B** du godet **20** sont ainsi coplanaires, à une première extrémité, à deux parois latérales opposées **213A, 213B** du premier couvercle **21,** et, à une deuxième extrémité, à deux parois latérales opposées **223A, 223B** du deuxième couvercle **22.**

Les petites parois latérales **204A, 204B** du godet **20** sont ainsi coplanaires, à une première extrémité, à deux parois latérales opposées **214A, 214B** du premier couvercle **21,** et, à une autre extrémité, à deux parois latérales **224A, 224B** opposées du deuxième couvercle **22.**

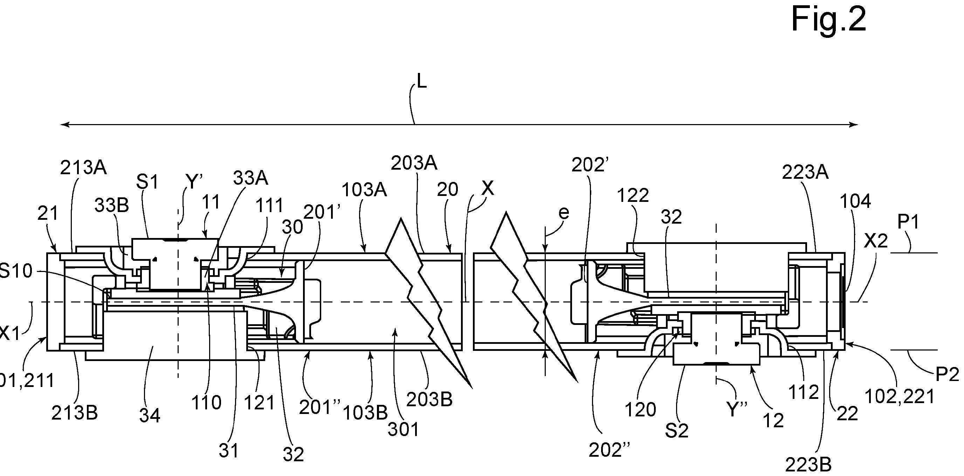

Conformément à l'invention, le boitier **100** comprend :
- un premier orifice principal **111** (représenté sur la figure 2) s'étendant dans un premier plan de référence **P1** coplanaire à une première paroi latérale du boitier **100** parmi la pluralité de parois latérales **103A, 103B, 104A, 104B,** en particulier l'une grande paroi latérale ou paroi latérale transverse **103A** du boitier **100 ;** et
- un deuxième orifice principal **112** (représenté sur la figure 2) s'étendant dans un deuxième plan de référence **P2** coplanaire à une deuxième paroi latérale du boitier **103B,** parmi la pluralité de parois latérales **103A, 103B, 104A, 104B,** en particulier l'autre grande paroi latérale ou paroi latérale transverse **103B** du boitier **100,** la deuxième paroi latérale **103B** étant parallèle à la première paroi latérale **103A** du boitier. Autrement dit les plans de références **P1** et **P2** sont parallèles.

En particulier, la distance entre les plans de références **P1** et **P2** défini une épaisseur e du boitier **100** de la cellule **10** de batterie. Chacun de ces premier et deuxième orifices principaux **111, 112** est configuré pour accueillir respectivement un premier terminal **11** et un deuxième terminal **12** de la cellule **10** de batterie.

Telles que représentées sur la figure 1, les première et deuxième parois latérales du boitier **103A, 103B** traversées par les premier et deuxième orifices principaux **111, 112** correspondent aux grandes parois latérales **103A, 103B** supérieure et. inférieure du boitier **100.**

De manière générale, le premier orifice principal **111** est disposé au voisinage de la première paroi d'extrémité **101** du boitier **100,** et le deuxième orifice principal **112** est disposé au voisinage de la deuxième paroi d'extrémité **102.** En particulier :
- le premier orifice principal **111** est compris dans le premier quart de la longueur **L** du boitier **100** adjacent à la première paroi d'extrémité **101** du boîtier **100 ;** et
- le deuxième orifice principal **112** est compris dans le premier quart de la longueur **L** du boîtier **100** adjacent à la deuxième paroi d'extrémité **102** du boitier **100** ;
de sorte que les premier et deuxième orifices principaux **111, 112** sont disposés de part et d'autre d'un axe transversal médian **A** du boitier **100** parallèle à un axe transversal **Y** du boitier **100.**

En particulier, dans le mode de réalisation de la figure 1 :
- le premier orifice principal **111** est porté par, ou solidaire, de l'un des deux couvercles, à savoir ici le premier couvercle **21 ;** et
- le deuxième orifice principal **112** est porté par, ou solidaire de, l'un des deux couvercles, à savoir ici le deuxième couvercle **22.**

Plus précisément, la paroi latérale **213A** du premier couvercle **21** est traversée par le premier orifice principal **111** dans lequel est inséré un premier terminal de cellule **11** en position assemblée. La paroi latérale **223A** du deuxième couvercle **22** est traversée par le deuxième orifice principal **112** dans lequel est inséré le deuxième terminal de cellule **12.** Les premier et deuxième orifices principaux **111, 112** sont par exemple formés par perçage ou découpage des parois latérales **213A, 223B** correspondantes des couvercles **21, 22** associés de la cellule **10.**

Le boitier **100** comprend également :
- un premier orifice secondaire **121** complémentaire du premier orifice principal **111,** s'étendant dans le deuxième plan de référence **P2,** de préférence disposé en regard du premier orifice principal **111** par rapport à un axe **Y'** parallèle à un axe transversal **Y ;** et/ou
- un deuxième orifice secondaire **122** complémentaire du deuxième orifice principal **112,** s'étendant dans le premier plan de référence **P1,** de préférence disposé en regard du deuxième orifice principal **112** par rapport à un axe **Y"** parallèle à un axe transversal **Y.**

Les premier et deuxième terminaux **11, 12** de la cellule **10** possèdent respectivement une première surface de contact électrique **S1** et une deuxième surface de contact électrique **S2** parallèles aux parois latérales **213A, 223B** des premier et deuxième couvercles **11, 12** traversées respectivement par le premier orifice principal **111** et le deuxième orifice principal **112,** et plus généralement parallèles aux parois latérales **103A, 103B** avant et arrière correspondantes.

Les surfaces de contact **S1, S2** planes des premiers et deuxième terminaux **11, 12** sont constituées d'un matériau électriquement conducteur.

Ainsi, les premier et deuxième terminaux **11, 12** sont positionnés latéralement de part et d'autre de l'axe de référence **X** du boitier **100,** dans des orifices **111, 112** coplanaires aux grandes surfaces **103A, 103B** du godet **20** du boitier **100.** Une droite normale aux surfaces de contact **S1, S2** des premiers et deuxième terminaux **11, 12** est donc orthogonale à l'axe longitudinal de référence **X.** La surface de contact **51** du premier terminal **11** est orientée transversalement dans une direction opposée à celle de la surface de contact **S2** du deuxième terminal **12.**

Le boitier **100** fermé délimite un espace intérieur **30** dans lequel est logé au moins un empilement **301** formé de paires d'électrodes positives et d'électrodes négatives et d'un séparateur séparant chaque paire d'électrodes, le nombre d'empilements variant selon la taille du boitier **100** de la cellule **10.** L'électrolyte utilisé peut être un électrolyte liquide ou solide.

La figure 2 représente un détail d'une première et d'une deuxième interfaces de fixation **110, 120** maintenant fixement en position les premier et deuxième terminaux de cellule **11, 12** à travers les premier et deuxième orifices principaux **111, 112.**

La première interface de fixation **110** permet de maintenir le premier terminal de cellule **11** en position traversante du premier orifice principal **111,** la première interface de fixation **110** comprenant au moins une paire de pièces annulaires **33A, 33B** entourant le premier terminal **11** et comprenant une pièce annulaire intérieure **33A** de fixation et une pièce annulaire extérieure **33B** de fixation coopérant ensemble à travers l'orifice principal **111** et assurant une fonction de maintien du premier terminal **11** et d'étanchéité entre l'intérieur du boitier **100** et l'extérieur. Le maintien assuré par la paire de pièces annulaires **33A, 33B** est d'une part longitudinal pour permettre de maintenir centré le premier terminal **11** à travers ledit orifice principal **111,** et d'autre part, transversal en maintenant le premier terminal à un même niveau. Ces moyens de maintient permettent de maintenir déportée la surface de contact **51** correspondante à une distance prédéterminée de la paroi associée du premier couvercle **21** (paroi **213A**), et plus généralement du boitier **100** (paroi **103A**), qui est constante.

Le boitier **100** fermé délimite un espace intérieur **30** dans lequel est logé au moins un empilement **301** formé de paires d'électrodes positives et d'électrodes négatives et d'un séparateur séparant chaque paire d'électrodes, le nombre d'empilements variant selon la taille du boitier **100** de la cellule **10.** De préférence, l'électrolyte utilisé est un électrolyte solide. Les électrodes d'une même polarité sont reliées à un premier collecteur de courant **31,** qui présente le plus souvent une forme de feuillard métallique permettant de relier électriquement les électrodes d'un premier pôle électrique de l'empilement **301,** par exemple de polarité positive, au premier terminal **11** de cellule.

Plus précisément, le premier collecteur de courant **31** s'étend longitudinalement dans l'espace intérieur **30** du boitier **100.** Une extrémité distale du premier collecteur de courant **31** vient se loger dans l'espace intérieur du premier couvercle **21.** Le premier collecteur de courant **31** prend la forme d'une lamelle en matériau électriquement conducteur pincée transversalement d'une part entre une butée **34** et d'autre part, le premier terminal **11** de cellule.

Dans une telle configuration, le premier collecteur de courant **31** vient au contact d'une surface intérieure **S10** électriquement conductrice, de préférence plane, du premier terminal de cellule **11,** sur laquelle il est fixé par soudure, de préférence par une soudure laser.

Par ailleurs, le premier couvercle **21** du boitier **100** comporte le premier orifice secondaire **121** disposé transversalement en regard du premier orifice principal **111** du premier couvercle **11** du boitier **10.** Ainsi, d'un côté du boitier **100,** la paroi latérale **213A** du premier couvercle **21** est traversée par le premier orifice principal **111** dans lequel est inséré le premier terminal de cellule **11** en position assemblée et de l'autre côté du boitier **100,** sur la paroi opposée, la paroi latérale **213B** du premier couvercle **21** est traversée par le premier orifice secondaire **121.** Ces deux orifices **111, 121** sont centrés suivant un axe de terminal **Y'** parallèle à l'axe transversal **Y.**

Le premier orifice secondaire **121** permet, lors de l'assemblage de la cellule **10** de batterie, d'offrir une fenêtre d'accès à l'intérieur du boitier **100** pour procéder à des opérations de fabrication, notamment pour souder le premier collecteur de courant **31** sur la surface de contact électrique intérieure **S10** du premier terminal **11** ou encore manipuler la pièce annulaire intérieure **33A** pour faciliter sa coopération avec la pièce annulaire extérieure **33B.**

La butée **34** forme un bouchon de l'orifice secondaire **121** et est configurée pour fermer le premier orifice secondaire **121,** en position assemblée, et présente une extrémité distale logée à l'intérieur du boitier **100** en position assemblée configurée pour venir contre le premier collecteur de courant **31** alors pincé transversalement entre le premier terminal **11** et ladite butée **34.** Une extrémité proximale de ladite butée **34** forme une tête de la butée **34** et vient couvrir le premier orifice secondaire **121** à l'extérieur du boitier **100** et fermer ledit orifice **121.** Cette extrémité proximale est fixée à la paroi **103B** du boitier **100** associée par des moyens de fixation telle qu'une soudure. Pour améliorer l'étanchéité du boitier **100,** le corps de la butée **34** au droit du premier orifice secondaire **121** présente une section ajustée au profil dudit orifice secondaire **121.**

La cellule **10** comprend en outre une garniture isolante **32** pour isoler électriquement à l'intérieur du boitier **100** l'ensemble de connectique depuis le premier collecteur **31** jusqu'au premier terminal **11.** La garniture isolante **32** présente ici la forme d'un film en matériau électriquement isolant pour empêcher tout faux contact ou mauvaise circulation du courant dans le premier terminal **11**

De façon quasi-symétrique par rapport à l'axe longitudinal de référence **X,** la cellule **10** comporte, à une autre extrémité axiale, une deuxième interface de fixation **120** maintenant fixement en position le deuxième terminal de cellule **12** à travers le deuxième orifice principal **112.** Un deuxième collecteur de courant **32** permet de relier électriquement les électrodes d'un deuxième pôle électrique de l'empilement **301,** par exemple de polarité négative, au deuxième terminal **12** de cellule **10.**

La configuration de l'ensemble de connectique depuis le deuxième collecteur **32** jusqu'au deuxième terminal **12** est similaire à celui associé au premier terminal **11.** En substance, ces configurations diffèrent essentiellement en ce que le deuxième terminal **12** est orienté transversalement dans une direction opposée à celle du premier terminal **11.** En effet, l'orientation est inversée puisque le deuxième orifice principal **112** traverse la paroi opposée **103B** du boitier **100,** et plus précisément la grande paroi latérale **223B** correspondante du deuxième couvercle **22.**

Selon un mode de réalisation particulier, les premier et deuxième couvercles **21, 22** de la cellule **10** sont chacun munis d'un premier et d'un deuxième trous traversants de montage **40** orientés transversalement par rapport à la cellule **10** et situés transversalement de part et d'autre des premier et deuxième terminaux de cellule **11, 12.**

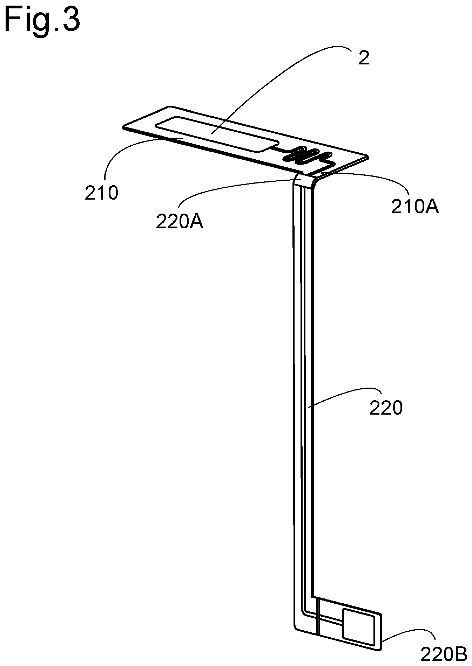

La figure 3 illustre une portion de circuit de surveillance **200** pour une cellule **10** de batterie. La portion de circuit de surveillance **200** comprend une languette d'interconnexion **210** et un connecteur **220** de languettes **210.**

La languette d'interconnexion **210** présente la forme d'une lamelle d'épaisseur homogène, la lamelle présentant un contour quasi rectangulaire et étant destinée à venir au contact d'une surface de contact **S1, S2** d'un des terminaux **11, 12** d'une cellule **10** de batterie. De préférence, la lamelle recouvre entièrement la surface de contact **S1, S2** du terminal **11, 12.** Avantageusement, la languette d'interconnexion **210** présente un gabarit identique au gabarit de la surface de contact **S1, S2** du terminal **11, 12.**

L'épaisseur de la languette d'interconnexion **210** est apte à se déformer élastiquement pour s'adapter à la surface de contact **51** du premier terminal **11** de la cellule **10.** Plus précisément, la languette d'interconnexion **210** possède une épaisseur inférieure à 1 mm, de préférence inférieure à 0,5 mm, par exemple égale à 0,2 mm.

Telle qu'illustrée sur la figure 3, la languette **210** présente, à une première extrémité, une bande de matière **210A** dans le prolongement de la languette **210.**

Par ailleurs, un circuit imprimé **2** fixé sur la languette d'interconnexion **210** permet de relever au moins une donnée prédéterminée de la cellule **10** de batterie, par exemple la tension de la cellule **10** de batterie.

Le connecteur **220** de languettes **210** présente la forme d'un feuillard métallique déformable élastiquement. En particulier, le connecteur **220** de languettes **210** est prévu pour être plié d'un angle au moins égal à 90°, de préférence compris entre 90° et 180°, sans être détérioré, de manière à longer les parois de la cellule **10** de batterie.

Plus précisément, le connecteur **220** de languettes **210** comprend une première portion d'extrémité **220A** et une deuxième portion d'extrémité **220B,** la première portion d'extrémité **220A** du connecteur **220** de languettes **210** étant reliée à la bande de matière **210A** de la languette d'interconnexion **210** en position assemblée de la partie de circuit de surveillance **200** sur la cellule **10.**

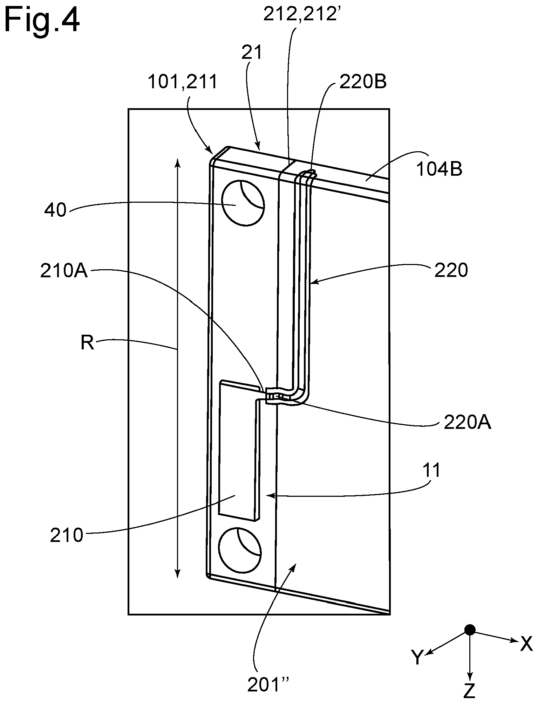

Par ailleurs, chaque connecteur **220** de languettes **210** possède une longueur standardisée pouvant être ajustable par découpage pour correspondre à un positionnement choisi des connecteurs **220** de languettes **210** sur la cellule **10** de batterie, notamment pour s'adapter à différentes dimensions de cellules **10** de batterie, comme représenté sur les figures 4 à 8.

Les languettes d'interconnexion **210** et le connecteur **220** de languettes **210** sont obtenues à partir de découpes dans un feuillard métallique.

Sur la figure 4 est représentée une partie de la cellule **10** de batterie de la figure 1. La cellule **10** est en particulier munie de la partie de circuit de surveillance **200** de la figure 3, et suivant un premier mode de réalisation de l'invention.

Telle qu'illustrée sur la figure 4, la bande de matière **210A** de la languette **210,** située à une première extrémité verticale de la languette **210,** s'étend axialement sur la première paroi latérale **103A** du boitier **100,** en particulier dans l'exemple représenté vers la première portion d'extrémité **201"** du godet **20** de la cellule **10.**

Suivant différents modes de réalisation :
- la languette d'interconnexion **210** du circuit de surveillance **200** est clipsée à la surface de contact **51** du premier terminal **11** de la cellule **10 ;** et/ou
- la languette d'interconnexion **210** du circuit de surveillance **200** est collée à la surface de contact **51** du premier terminal **11** de la cellule **10 ;** et/ou
- la languette d'interconnexion **210** du circuit de surveillance **200** est pincée à la surface de contact **51** du premier terminal **11** de la cellule **10.**

La première portion d'extrémité **220A** du connecteur **220** est liée à un coude formé dans un plan vertical de la cellule **10,** le coude permettant de déporter une portion verticale du connecteur **220** portant la deuxième portion d'extrémité **220B** axialement vers l'intérieur de la cellule **10** pour se déporter et laisser libre le trou traversant de montage **40** de la cellule **10.**

En particulier, le connecteur **220** de languettes **210** s'étend principalement dans une direction parallèle à la première paroi d'extrémité **101** du boitier **100** et à distance axiale du premier terminal **11** de cellule **10,** la deuxième portion d'extrémité **220B** du connecteur **220** étant fixée sur la paroi latérale supérieure **104B** du boitier **100.**

Suivant différents modes de réalisation de l'invention, la première portion d'extrémité **220A** du connecteur **220** de languettes **210** et la bande de matière **210A** de la languette d'interconnexion **210** sont formés d'un seul tenant, et fixées à la paroi latérale supérieure **104B** du boitier **10** par des moyens de fixation. Par exemple :
- la deuxième portion d'extrémité **220B** du connecteur **220** est collée à la paroi latérale supérieure **104B** du boitier **100 ;** et/ou
- la deuxième portion d'extrémité **220B** du connecteur **220** est fixée directement à la paroi latérale supérieure **104B** du boitier **100 ;** ou
- la deuxième portion d'extrémité **220B** du connecteur **220** est fixée à la paroi latérale supérieure **104B** du boitier **100** par l'intermédiaire d'une pièce additionnelle de fixation.

Suivant un mode de réalisation préférentiel, la première portion d'extrémité **220A,** la deuxième portion d'extrémité **220B** du connecteur **220** de languettes **210** et la bande de matière 210A de la languette d'interconnexion 210 sont d'un seul tenant.

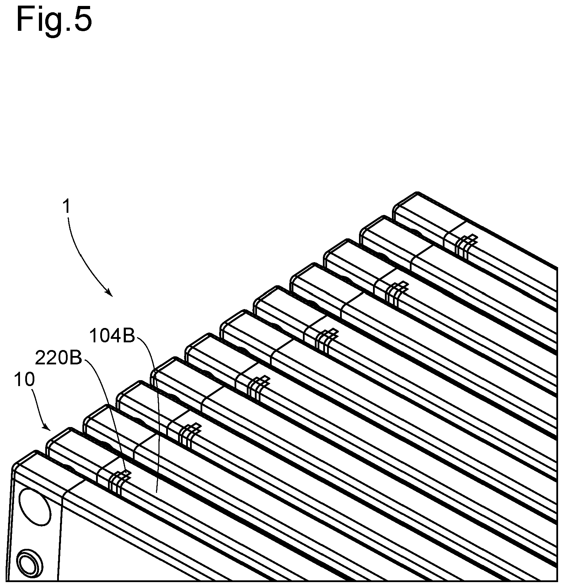

Sur la figure 5 est représentée une partie d'un ensemble **1** de cellules **10** formé d'une pluralité de cellules **10,** selon un premier mode de réalisation de l'invention. Les cellules **10** de la pluralité de cellules **10** sont alignées suivant un axe d'assemblage **A,** transversal aux cellules **10.** Cet axe d'assemblage **A** est orthogonal aux axes longitudinaux des cellules **10,** de sorte que lorsque les cellules **10** sont alignées suivant l'axe d'assemblage **A,** les trous traversants **40** des cellules **10** sont transversalement alignés.

Plus particulièrement, les cellules **10** de la pluralité de cellules **10** sont accolées et en vis-à-vis deux à deux suivant l'axe d'assemblage **A,** chaque paire de cellules **10** donnée comportant une cellule **10** munie d'une partie de circuit de surveillance **200,** telle que représentée sur la figure 4. En position assemblée de l'ensemble, pour chaque paire de cellules **10** donnée, une languette d'interconnexion **210** du circuit de surveillance **200,** de préférence unique, se situe entre un premier terminal 11 de l'une des cellules **10** de la paire de cellules adjacentes et un deuxième terminal **12** de l'autre des cellules **10** de la paire de cellules adjacentes, et un connecteur **220** de languettes **210** est fixé sur l'une des cellules **10** de la paire de cellules adjacentes.

Ainsi, la languette d'interconnexion **210** permet d'assurer le contact électrique entre les premier et deuxième terminaux **11, 12** des cellules **10** de la paire de cellules adjacentes en comblant les défauts des surfaces de contact **S1, S2** respectivement des premier et deuxième terminaux **11, 12** des cellules **10,** tout en relevant la tension de charge des cellules **10** de la paire de cellules associée.

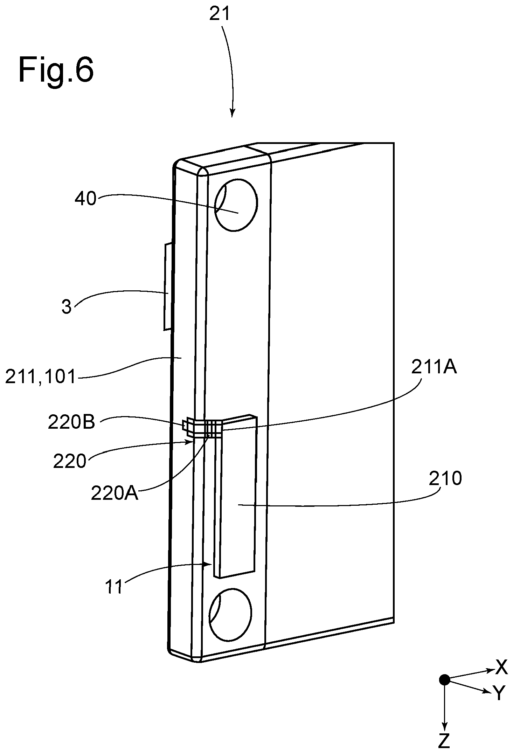

Sur la figure 6 est représentée une partie de la cellule **10** de batterie munie du circuit de surveillance **200,** visible en partie seulement sur cette figure 6, suivant un deuxième mode de réalisation de l'invention.

Le deuxième mode de réalisation la figure 6 diffère essentiellement du premier mode de réalisation en ce que le connecteur **220** de languettes **210** forme un coude dans un plan horizontal de la cellule **10** en position assemblée du circuit de surveillance **200** sur la cellule **10.**

De façon plus précise :
- la première portion d'extrémité **220A** du connecteur **220** de languettes **210** est reliée à une deuxième bande de matière **211A** de la languette d'interconnexion **210,** la deuxième bande de matière **211A** s'étendant axialement vers la première paroi d'extrémité **101** du boitier **100** de la cellule **10** ; et
- la deuxième portion d'extrémité **220B** du connecteur **220** de languettes **210** est fixée sur la première paroi d'extrémité **101** du boitier **100** de la cellule **10.**

Suivant différents modes de réalisation de l'invention, la première portion d'extrémité **220A** du connecteur **220** de languettes **210** et la deuxième bande de matière **211A** de la languette d'interconnexion **210** sont d'un seul tenant, et fixées à la première paroi d'extrémité **101** du boitier **10** par des moyens de fixation. Par exemple :
- la deuxième portion d'extrémité **220B** du connecteur **220** est collée à la première paroi d'extrémité **101** du boitier **100 ;** et/ou
- la deuxième portion d'extrémité **220B** du connecteur **220** est fixée directement à la première paroi d'extrémité **101** du boitier **100** ; ou
- la deuxième portion d'extrémité **220B** du connecteur **220** est fixée à la première paroi d'extrémité **101** du boitier **100** par l'intermédiaire d'une pièce additionnelle de fixation.

La figure 7 illustre une partie de l'ensemble **1** de cellules **10** selon un deuxième mode de réalisation de l'invention. Le deuxième mode de réalisation diffère essentiellement du premier en ce que chaque paire de cellules **10** donnée comporte une cellule **10** telle qu'illustrée sur la figure 6.

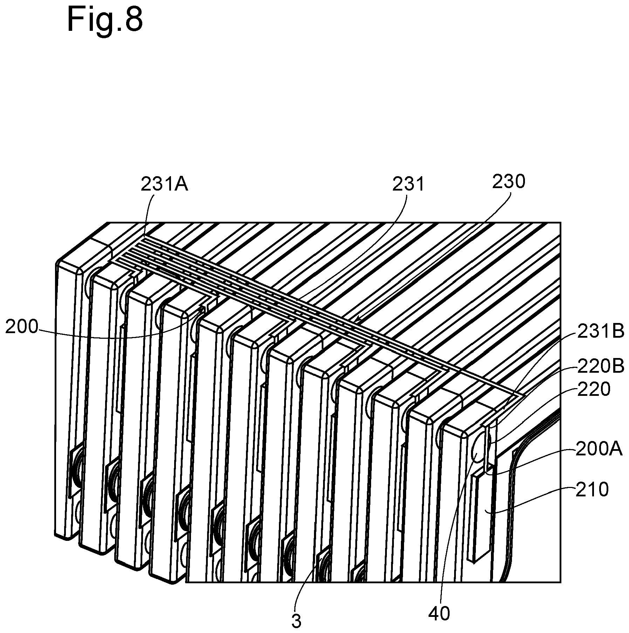

Sur la figure 8 est représenté l'ensemble **1** de cellules **10** de batterie muni du circuit de surveillance **200** selon un troisième mode de réalisation de l'invention. Ce troisième mode de réalisation diffère essentiellement du premier et du deuxième modes de réalisation en ce que le connecteur **220** de languettes **210** s'étend verticalement sur le boitier **100** de la cellule **10.**

En particulier, la première portion d'extrémité **220A** du connecteur **220** de languettes **210** est reliée à un côté supérieur de la languette d'interconnexion **210** et la deuxième portion d'extrémité **220B** du connecteur **220** de languettes **210** est fixée sur la paroi latérale supérieure **104B** du boitier **100** de la cellule **10.**

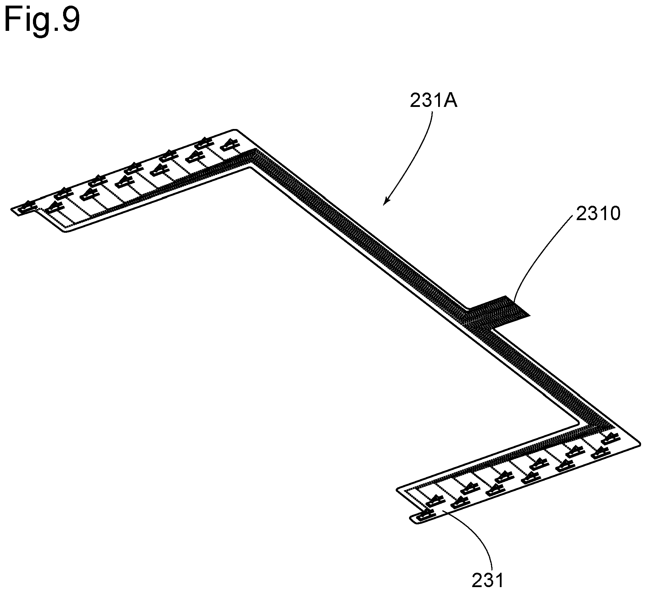

De plus, le circuit de surveillance **200** représenté sur la figure 8 comprend :
- une pluralité de languettes d'interconnexion **210** ;
- une pluralité de connecteurs **220** de languettes **210** ;
- un réseau de connexions **230,** le réseau de connexions **230** permettant de relier électriquement les connecteurs **220** de languettes **210** à un connecteur intermédiaire **231A** du circuit de surveillance **200** (représenté sur la figure 9).

En particulier, le réseau de connexions **230** comprend une pluralité de connecteurs **231** du réseau de connexions **230.** Les connecteurs **231** sont métalliques et déformables élastiquement, chaque connecteur **231** du réseau **230** étant relié, à une première extrémité, au connecteur intermédiaire **231A** reliant tous les connecteurs **231** du réseau de connexions **230** à une carte électronique centrale (non représentée) du circuit de surveillance **200** à l'aide d'un faisceau de connexion **2310.** À une deuxième extrémité opposée à la première, chaque connecteur **231** du réseau **230** comprend une portion d'extrémité **231B.**

Il y a autant de languettes d'interconnexion **210** que de connecteurs **220** de languettes **210,** et autant de connecteurs **220** de languettes **210** que de connecteurs **231** du réseau **230.** Chaque connecteur **220** de languettes **210** relie électriquement une unique languette d'interconnexion **210** à un unique connecteur **231** du réseau de connexions **230,** et chaque connecteur **231** du réseau de connexions **230** relie électriquement un unique connecteur **220** de languettes **210** au connecteur intermédiaire **231A** du circuit de surveillance **200.** Par ailleurs, chaque faisceau de connexion **2310** est relié électriquement à la carte électronique centrale du circuit de surveillance 200 pour traiter la donnée prédéterminée relevée par les languettes d'interconnexion **210.**

Selon le mode de réalisation représenté sur la figure 8, le connecteur intermédiaire **231A** du réseau de connexions **230** est fixé sur une petite paroi latérale d'une cellule d'extrémité de la pluralité de cellules **10,** chaque connecteur **231** du réseau **230** de la pluralité de connecteurs **231** s'étendant dans une direction parallèle à l'axe d'assemblage **A** de l'ensemble **1** de cellules **10,** pour être fixé à la deuxième portion d'extrémité **220B** de chaque connecteur **220** associé de la pluralité de connecteurs **220** de languettes **210.**

Plus précisément, chaque portion d'extrémité **231B** s'étend dans une direction parallèle à l'axe de référence **X** de chaque cellule **10** pour être fixée à la deuxième portion d'extrémité **220B** du connecteur **220** de languettes **210** associé.

Suivant différents modes de réalisation de l'invention, chaque portion d'extrémité **231B** de la pluralité de connecteurs **231** est collée ou soudée à la deuxième portion d'extrémité **220B** du connecteur **220** de languettes **210** associé.

De manière générale, la forme de chaque connecteur **231** de la pluralité de connecteurs **231** est adaptable pour correspondre au positionnement du connecteur **220** de languettes **210** qui lui associé et pouvoir intégrer le réseau de connexion **230** sur des ensembles **1** de cellules **10** comprenant des cellules **10** de dimensions différentes à celles représentées sur la figure 8.

En particulier, les connecteurs de languettes **220,** les languettes d'interconnexion **210** et le réseau de connexion **230** du circuit de surveillance **200** sont fabriqués en matériau laminé, le matériau laminé comprenant une couche de feuille métallique intercalée entre deux couches de matériau électriquement isolant.

De préférence, la feuille métallique est au moins en partie en cuivre, par exemple est constituée de cuivre, et le matériau électriquement isolant est constitué de plastique.

Pour relier électriquement la pluralité de cellules **10** de l'ensemble **1,** un boulon (non représenté) constitué d'une tige filetée à tête telle qu'une vis et d'un écrou taraudé complémentaire de la vis peut être inséré dans chaque rangée de trous traversants **40** des cellules **10** pour presser la pluralité de cellules **10** de part et d'autre de l'axe d'assemblage **A.** Les boulons constituent des moyens de compression **4** de l'ensemble **1.**

Selon un autre mode de réalisation non représenté, l'ensemble **1** de la pluralité de cellules **10** peut être réalisé par d'autres moyens de compression **4** disposés de part et d'autre de l'axe d'assemblage **A** ou entre les terminaux **11, 12** des cellules. Par exemple, les moyens de compression **4** peuvent comprendre une première et une deuxième mâchoires disposées aux deux extrémités transversales de la pluralité de cellules **10** de batterie, les mâchoires comprenant chacune un élément mobile suivant un axe longitudinal de la pluralité de cellules **10** permettant de compresser la pluralité de cellules **10** de part et d'autre de l'axe d'assemblage **A** de la pluralité de cellules **10.**

Selon un autre mode de réalisation de l'invention, l'ensemble **1** de la pluralité de cellules **10** peut être obtenu par la combinaison d'au moins deux moyens de compression **4** des cellules **10.**

Les moyens de compression **4** des cellules **10** exercent, une pression de serrage des cellules **10** élevée permettant de garantir un contact électrique entre les cellules **10** et les languettes d'interconnexion **210** associées.

De préférence, l'ensemble **1** de cellules **10** comprend à une première extrémité axiale, un premier circuit de surveillance **200** et, à une deuxième extrémité axiale (non représentée) un deuxième circuit de surveillance **200.** Plus précisément, pour une cellule **10** donnée de l'ensemble **1** apte à former avec une première cellule **10** adjacente une première paire de cellules adjacentes, et avec une deuxième cellule **10** adjacente différente de la première cellule **10** adjacente une deuxième paire de cellules adjacentes :
- sur la première extrémité axiale de l'ensemble **1** de cellules **10,** une languette d'interconnexion 210 du premier circuit de surveillance **200** est en contact avec le premier terminal 11 de la cellule **10** donnée et avec le deuxième terminal **12** de la première cellule **10** adjacente ; et
- sur la deuxième extrémité axiale de l'ensemble **1** de cellules 10, une languette d'interconnexion 210 du deuxième circuit de surveillance **200** est en contact avec le deuxième terminal 12 de la cellule 10 donnée et avec le premier terminal **11** de la deuxième cellule 10 adjacente ;
de sorte que les languettes d'interconnexion **210** des premier et deuxième circuits de surveillance **200** respectent le positionnement en quinconce des terminaux **11, 12** de cellules **10.**

Ainsi, dans l'ensemble **1** de cellules **10,** la compression entre les cellules **10** est localisée au niveau du contact entre une languette d'interconnexion **210** du circuit de surveillance **200** et deux terminaux **11, 12** de deux cellules d'une paire de cellule **10** adjacentes. Cette connexion amplifie un jeu crée par l'épaisseur des terminaux **11, 12** des cellules **10,** le jeu étant situé au niveau de zones d'espacements entre deux cellules d'une paire de cellules adjacentes, à distance des surfaces de contacts électriques **S1, S2** des terminaux **11, 12.** Un tel jeu peut laisser un degré de mobilité à une cellule dans l'ensemble **1.**

Pour pallier une telle contrainte, l'ensemble **1** de cellules **10** peut disposer de séparateurs ou tampons de compensation rigides (non représentés) permettant de compenser la distance entre deux extrémités longitudinales de deux grandes parois latérales **104A, 104B** de deux cellules **10** adjacentes qui ne sont pas reliées par des terminaux de cellules **11, 12.** Plus précisément, lorsqu'une languette d'interconnexion **210** est en contact avec deux terminaux **11, 12** de deux cellules adjacentes suivant un premier axe transversal **Y',** un séparateur coplanaire à la surface de contact électrique des deux terminaux **11, 12** associés et centré sur le deuxième axe transversal **Y"** peut être inséré pour compenser la distance entre les deux cellules **10.** Un tel séparateur peut ainsi être interposé entre chacune des cellules adjacentes de l'ensemble **1** de cellules **10.**

Par ailleurs, l'ensemble **1** de cellules **10** peut disposer d'un système de refroidissement (représenté sur la figure 8) permettant de réguler la température de l'ensemble **1** de cellules **10** lorsqu'il est en fonctionnement. Le système de refroidissement comprend une pluralité d'éléments de refroidissement **3** fixés sur les cellules **10** par collage.

De préférence les éléments de refroidissement **3** sont fabriqués en un matériau multicouche comprenant une couche de feuille métallique à conductivité thermique élevée intercalée entre deux couches de matériau électriquement isolant.

De préférence, la feuille métallique est au moins en partie en aluminium, par exemple est constituée d'aluminium, et le matériau électriquement isolant est constitué de plastique.

Suivant un mode de réalisation préférentiel de l'invention, la réalisation de l'ensemble **1** de cellules **10** comporte les étapes suivantes :
(1) disposer une cellule **10** de l'ensemble **1** de cellules **10** dans une enveloppe de module de batterie ;
(2) connecter les languettes d'interconnexion **210** des circuits de surveillance **200** associées à la cellule **10** sur les terminaux **11,12** de la cellule **10** ;
les étapes (1) et (2) étant répétées jusqu'à obtenir l'ensemble **1** de cellules **10** de batterie.

Suivant un autre mode de réalisation de l'invention, la réalisation de l'ensemble **1** de cellules **10** comporte les étapes suivantes :
- connecter chaque languette d'interconnexion **210** des circuits de surveillance **200** au terminal associé **11, 12** d'une cellule **10** d'une paire de cellules **10,** et ce, pour chaque paire de cellules de l'ensemble **1** de cellules **10** ;
- assembler les paires de cellules de l'ensemble **1** de cellules **10** dans une enveloppe de module de batterie.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

Par exemple, selon une autre variante de l'invention, chaque cellule **10** de l'ensemble de cellules **1** comporte un boitier **100** formé d'un godet **20,** et d'un couvercle **11** pour fermer un espace intérieur **30** du godet **20,** et :
- le premier orifice principal **111** est solidaire du godet **20** ou du couvercle **11** ; et
- le deuxième orifice principal **112** est solidaire du godet **20** ou du couvercle **11.**

De préférence :
- si l'un parmi les premier et deuxième orifices principaux **111, 112** est solidaire du godet **20,** l'autre parmi les premier et deuxième orifices principaux **111, 112** est solidaire du godet **20** ;
- si l'un parmi les premier et deuxième orifices principaux **111, 112** est solidaire du couvercle **11,** l'autre parmi les premier et deuxième orifices principaux est solidaire du godet **20.**

Selon une deuxième variante de l'invention, chaque cellule **10** de l'ensemble de cellules **1** comporte un boitier **100** formé d'un godet **20,** fermé par un premier et un deuxième couvercles **11, 12** pour fermer un espace intérieur **30** du godet **20,** et :
- le premier orifice principal **111** est solidaire du godet **20 ;** et
- le deuxième orifice principal **112** est solidaire du godet **20.**

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Ensemble (1) de cellules (10) d'une batterie, l'ensemble (1) comprenant une pluralité de cellules (10) configurées pour être accolées successivement deux à deux suivant un axe d'assemblage (A) dans une position assemblée de l'ensemble (1) de cellules (10), chaque cellule (10) comprenant :
- un boitier (100) comprenant au moins une première et une deuxième parois latérales (103A, 103B) s'étendant parallèlement entre elles et orthogonalement à l'axe d'assemblage (A) dans la position assemblée ;
- un premier terminal (11) et un deuxième terminal (12) ;
l'ensemble de cellules (1) étant **caractérisé en ce qu'**il comprend un circuit de surveillance (200) configuré pour détecter au moins une donnée prédéterminée de chaque cellule (10) de l'ensemble de cellules (1), le circuit de surveillance (200) comprenant une pluralité de languettes d'interconnexion (210), chaque languette d'interconnexion (210) étant destinée à recouvrir, au moins en partie, au moins un terminal (11) de l'une des cellules de chaque paire de cellules adjacentes.

2. Ensemble (1) selon la revendication 1, **caractérisé en ce que** :
- le premier terminal (11) est saillant depuis un premier orifice principal (111) de la cellule (10) associée, le premier orifice principal (111) s'étendant dans un premier plan de référence (P1) coplanaire à la première paroi latérale (103A) du boitier ; et
- le deuxième terminal (12) est saillant depuis un deuxième orifice principal (121) de la cellule (10) associée, le deuxième orifice principal (121) s'étendant dans un deuxième plan de référence (P2) coplanaire à la deuxième paroi latérale (103B) du boitier (100).

3. Ensemble (1) selon la revendication 2, **caractérisé en ce que** le premier terminal (11) de chaque cellule (10) de l'ensemble de cellules délimite une surface de contact (S1) parallèle et distante de la première paroi latérale (103A) du boitier (100).

4. Ensemble (1) selon l'une quelconque des revendications précédentes, **caractérisé en ce que** le circuit de surveillance (200) comprend un réseau de connexions (230) relié à une carte électronique centrale dudit circuit de surveillance (200) et une pluralité de connecteurs électriques (220) de languettes (210) pour relier électriquement la pluralité de languettes (210) au réseau de connexions (230).

5. Ensemble (1) selon l'une quelconque des revendications précédentes, **caractérisé en ce qu'**au moins une partie du circuit de surveillance (200) comprend un circuit flexible apte à se déformer élastiquement pour s'adapter à la forme de chaque cellule (10) de l'ensemble de cellules (1).

6. Ensemble (1) selon l'une quelconque des revendications précédentes, **caractérisé en ce que**, pour une cellule (10) d'une paire de cellules (10) adjacentes donnée de l'ensemble de cellules (1) :
- la languette d'interconnexion (210) associée du circuit de surveillance (200) est clipsée à la surface de contact (S1) du premier terminal (11) associé ; et/ou
- la languette d'interconnexion (210) associée du circuit de surveillance (200) est collée à la surface de contact (S1) du premier terminal (11) associé ; et/ou
- la languette d'interconnexion (210) associée du circuit de surveillance (200) est pincée sur la surface de contact (S1) du premier terminal (11) associé.

7. Ensemble (1) selon l'une quelconque des revendications précédentes dépendantes au moins de la revendication 4, **caractérisé en ce que** les connecteurs de languettes (220) et les languettes d'interconnexion (210) du circuit de surveillance (200) sont métalliques, de préférence au moins en partie en cuivre, par exemple sont constitués de cuivre.

8. Ensemble (1) selon l'une quelconque des revendications précédentes, **caractérisé en ce que** l'au moins une donnée prédéterminée détectée par le circuit de surveillance (200) comprend la tension de la pluralité de cellules (10) de l'ensemble de cellules (1).

9. Ensemble (1) selon l'une quelconque des revendications précédentes, **caractérisé en ce que** chaque cellule (10) de l'ensemble de cellules (1) comporte un boitier (100) formé d'un godet (20), et d'un ou deux couvercles (11, 12) pour fermer un espace intérieur (30) du godet (20), et **en ce que** :
- le premier orifice principal (111) est solidaire du godet (20) ou du couvercle (11) ou de l'un des deux couvercles (11, 12) ; et
- le deuxième orifice principal (112) est solidaire du godet (20) ou du couvercle (12) ou de l'autre des deux couvercles (11, 12).

10. Ensemble (1) selon l'une quelconque des revendications précédentes, **caractérisé en ce que**, dans une position assemblée de l'ensemble de cellules (1), pour chaque paire de cellules adjacentes de l'ensemble de cellules (1), une languette d'interconnexion (210) du circuit de surveillance (200), de préférence unique, se situe entre le premier terminal (11) de l'une des cellules de la paire de cellules adjacentes et le deuxième terminal (12) de l'autre des cellules de la paire de cellules adjacentes.

11. Ensemble (1) selon l'une quelconque des revendications précédentes, **caractérisé en ce qu'**il comprend des moyens de compression (4) pour presser l'ensemble de cellules (1) de part et d'autre dudit ensemble de cellules (1) suivant l'axe d'assemblage (A).

12. Ensemble (1) selon l'une quelconque des revendications précédentes, **caractérisé en ce que** les cellules possèdent chacune une longueur supérieure à 250 mm, de préférence supérieure à 300 mm et/ou inférieure à 1500 mm, de préférence inférieure à 1200 mm.
